# EUROPEAN PATENT APPLICATION

(11) **EP 3 524 853 A1**
(43) Date of publication of application: **14.08.2019**
(21) Application number: 17858500.6
(22) Date of filing: 05.10.2017
(51) Int. Cl.: F16H 25/22, F16H 25/24

(54) **CIRCULATION COMPONENT RETAINER AND BALL SCREW**

(30) Priority: 07.10.2016 JP 2016198980
(71) Applicant: NSK Ltd., Tokyo 141-8560 (JP)
(72) Inventor: WATARAI, Yusuke, Fujisawa-shi Kanagawa 252-0811 (JP); ISHIKAWA, Akihiko, Fujisawa-shi Kanagawa 252-0811 (JP)
(74) Representative: Rings, Rolf
(86) International application number: PCT/JP2017/036358
(87) International publication number: WO 2018/066664

(57) **Abstract**

Provided is a circulation component retainer configured to suppress breakage of a circulation component and jumping out of balls. A circulation component (20) is a resinous tubular member formed into a substantially C-shape and including leg portions (21) at both ends and an intermediate portion (22) arranged between both the leg portions (21). The circulation component (20) is attached to a nut (2) such that both the leg portions (21) are respectively inserted from an outer surface side of the nut (2) into a pair of through holes (13) opening to the outer surface of the nut (2) and communicating with a spiral groove (2a) of the nut (2), and the intermediate portion (22) is positioned on the outer surface of the nut (2). A circulation component retainer (30) made of metal and configured to fix the circulation component (20) to the nut (2) includes an intermediate portion pressing portion (32) configured to press the intermediate portion (22) in such a manner as to cover, among surfaces of the intermediate portion (22), all surfaces exposed from the outer surface of the nut (2) and leg portion pressing portions (31) configured to press the leg portions (21) in such a manner as to cover, among surfaces of the leg portions (21), all surfaces exposed from the outer surface of the nut (2).

## Description

### Technical Field

The present invention relates to a circulation component retainer and a ball screw.

### Background Art

Ball screws for use in injection molding machines and the like are deteriorated by wear and peeling caused in a spiral groove due to long-term use. This tends to cause clogging of balls in a ball circulation component, such as a return tube, due to peeled powder or the like. The clogging of the balls increases force loaded to the circulation component, which may result in breakage of the circulation component if it is made of resin. When the circulation component is broken, the balls may jump out of the broken part thereof, thereby causing malfunction of the ball screw.

PTL 1 discloses a ball screw in which a resinous circulation component is fixed to a nut in such a manner as to cover a portion of the circulation component that is exposed from the nut by means of a circulation component retainer made of metal. In the ball screw disclosed in PTL 1, the circulation component is covered by the circulation component retainer. Thus, the portion covered by the circulation component retainer is hardly broken, and even if broken, the circulation component retainer suppresses jumping out of balls.

However, in the ball screw disclosed in PTL 1, the circulation component is covered by the circulation component retainer to prevent the circulation component from being detached from the nut during circulation of the balls. Therefore, it is unnecessary to cover an entire region of the portion of the circulation component exposed from the nut by the circulation component retainer. Thus, an exposed portion not covered by the circulation component retainer may be broken, and when broken, the balls may jump out of the broken part, which may cause malfunction of the ball screw.

### Citation List

### Patent Literature

PTL 1: JP 2005-155887 A

### Summary of Invention

### Technical Problem

It is an object of the present invention to provide a circulation component retainer configured to suppress breakage of a circulation component and jumping out of balls and a ball screw in which breakage of a circulation component and jumping out of balls are suppressed, and thus malfunction hardly occurs.

### Solution to Problem

A circulation component retainer according to one aspect of the present invention is configured to be used in a ball screw including a screw shaft including a spiral groove on an outer peripheral surface of the screw shaft, a nut including a spiral groove facing the spiral groove of the screw shaft on an inner peripheral surface of the nut, a plurality of balls rollably arranged in a ball rolling path formed by both the spiral grooves, and a circulation component including a ball returning path configured to return the balls from an end point to a start point of the ball rolling path, in which the circulation component is a resinous tubular member formed into a substantially C-shape and including a leg portion at both ends and an intermediate portion arranged between both the leg portions, and is attached to the nut such that both the leg portions are respectively inserted from an outer surface side of the nut into a pair of through holes opening to the outer surface of the nut and communicating with the spiral groove of the nut, and the intermediate portion is positioned on the outer surface of the nut. The circulation component retainer is a circulation component retainer made of metal and configured to fix the circulation component to the nut, and includes an intermediate portion pressing portion configured to press the intermediate portion of the circulation component in such a manner as to cover, among surfaces of the intermediate portion of the circulation component, all surfaces exposed from the outer surface of the nut and leg portion pressing portions configured to press the leg portions of the circulation component in such a manner as to cover, among surfaces of the leg portions of the circulation component, all surfaces exposed from the outer surface of the nut.

A ball screw according to another aspect of the present invention includes the circulation component retainer according to the above one aspect.

### Advantageous Effects of Invention

The circulation component retainer according to the present invention suppresses breakage of the circulation component and jumping out of the balls. In the ball screw according to the present invention, breakage of the circulation component and jumping out of the balls are suppressed, so that malfunction hardly occurs.

### Brief Description of Drawings

FIG. 1 is a cross-sectional diagram of a ball screw according to a first embodiment of the present invention taken along a plane along an axial direction;
FIG. 2 is a plan view of the ball screw of FIG. 1;
FIG. 3 is a cross-sectional diagram of the ball screw of FIG. 1 taken along a plane orthogonal to the axial direction;
FIG. 4 is a perspective diagram of a circulation component retainer included in the ball screw of FIG. 1;
FIG. 5 is a diagram of the circulation component retainer included in the ball screw of FIG. 1 as viewed from an end portion side of an intermediate portion;
FIG. 6 is a perspective diagram of a circulation component included in the ball screw of FIG. 1;
FIG. 7 is a plan view of a ball screw according to a second embodiment of the present invention;
FIG. 8 is a cross-sectional diagram of the ball screw of FIG. 7 taken along a plane orthogonal to an axial direction;
FIG. 9 is a perspective diagram of a circulation component retainer included in the ball screw of FIG. 7;
FIG. 10 is a diagram of the circulation component retainer included in the ball screw of FIG. 7 as viewed from an end portion side of an intermediate portion;
FIG. 11 is a cross-sectional diagram of a ball screw of Comparative Example taken along a plane orthogonal to an axial direction; and
FIG. 12 is a perspective diagram of a circulation component retainer included in the ball screw of FIG. 11.

### Description of Embodiments

One embodiment of the present invention will be described in detail with reference to the drawings. It should be noted that the following first and second embodiments illustrate merely one example of the present invention, and the present invention is not limited to the following respective embodiments. Furthermore, various modifications or alterations can be made to the following respective embodiments, and such modified or altered embodiments can also be included in the scope of the present invention.

### [First Embodiment]

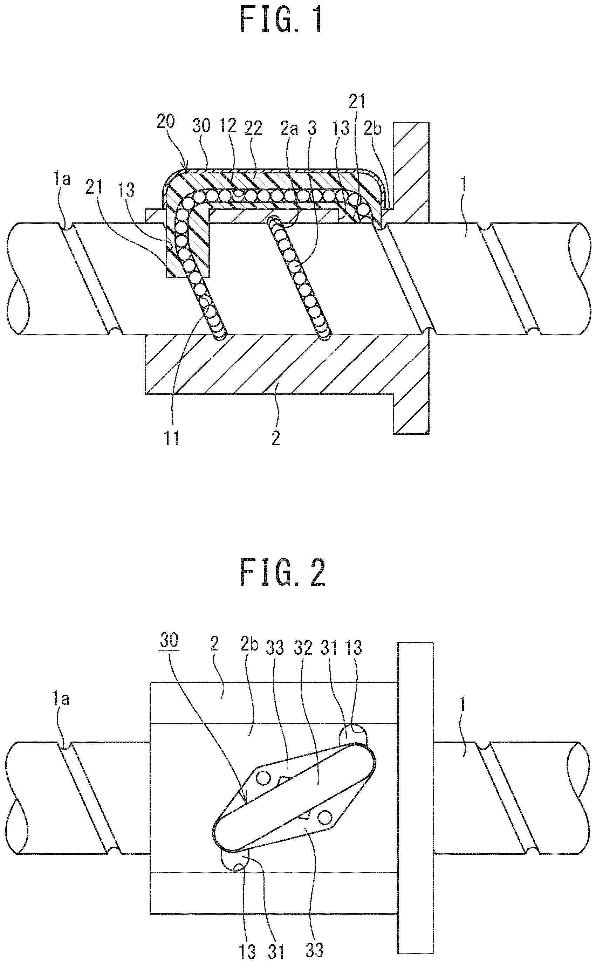

As illustrated in FIGS. 1, 2, and 3, a ball screw of the first embodiment includes a substantially circular columnar screw shaft 1, a substantially cylindrical nut 2, and a plurality of balls 3, 3, ..., in which the screw shaft 1 penetrates through the nut 2.

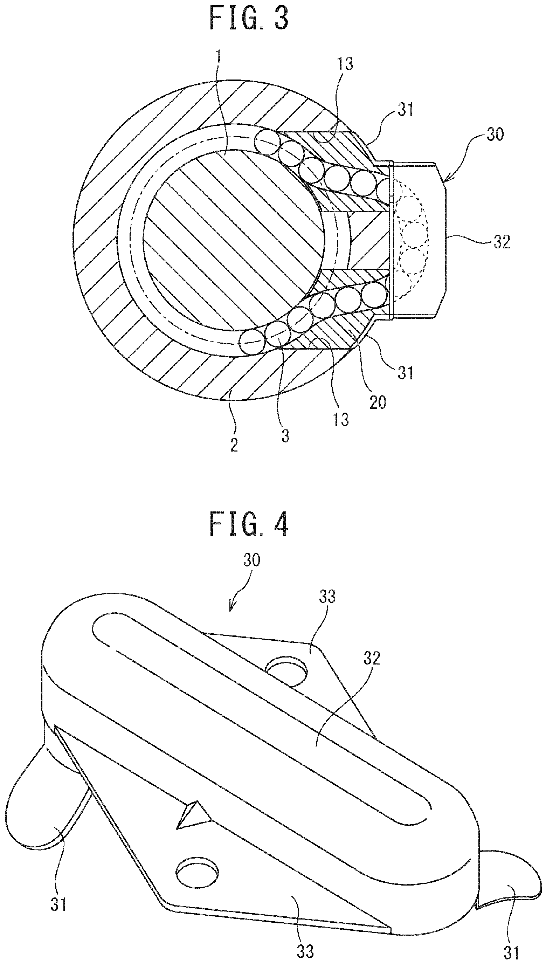

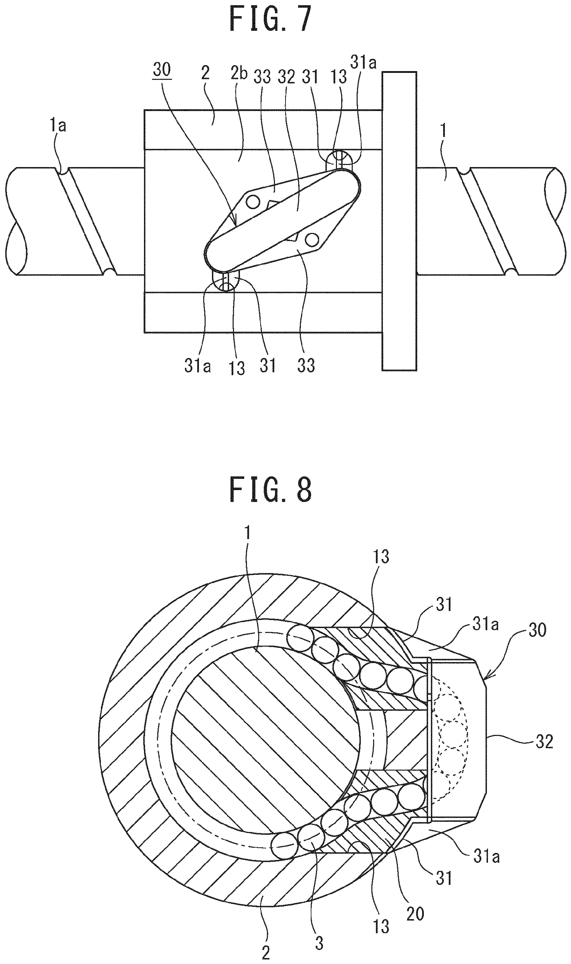

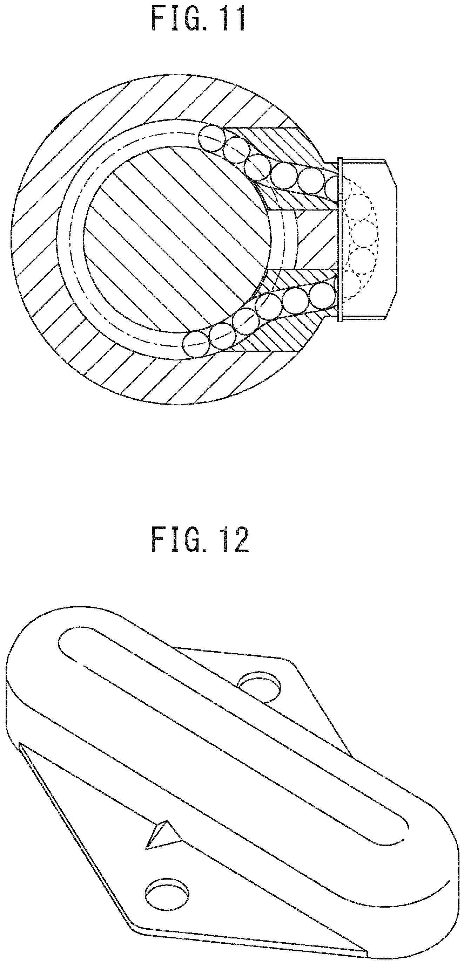

It should be noted that FIG. 1 is a cross-sectional diagram of the ball screw according to the first embodiment taken along a plane along an axial direction, in which while the nut 2 is illustrated in a cross-section taken along the plane along the axial direction of the ball screw, a circulation component 20 and a circulation component retainer 30, which will be described later, are illustrated in a cross-section taken along a plane along a moving direction of the balls 3 moving in a ball returning path 12. Additionally, FIG. 3 is a cross-sectional diagram of the ball screw of FIG. 1 taken along a plane orthogonal to the axial direction, in which while the screw shaft 1 and the nut 2 are illustrated in a cross-section taken along the plane orthogonal to the axial direction of the ball screw, the circulation component 20, which will be described later, is illustrated in a cross-section taken along the plane along the moving direction of the balls 3 moving in the ball returning path 12. The same also applies to FIGS. 8 and 11, which will be described later.

On an outer peripheral surface of the screw shaft 1 is formed a spirally continuous spiral groove 1a, and on an inner peripheral surface of the nut 2 is formed a spirally continuous spiral groove 2a. The spiral grooves 1a and 2a face ether other to form a spiral ball rolling path 11 in which the balls 3 roll. Then, the plurality of balls 3 are rollably arranged in the ball rolling path 11. Note that the spiral grooves 1a and 2a each have a cross-sectional shape (the shape of a cross-section taken along a plane orthogonal to a continuous direction of each of the spiral grooves 1a and 2a) that may be a Gothic arc shape having a substantially V shape formed by combining two circular arcs having different curvature centers or a curved shape formed by a single circular arc.

Furthermore, the ball screw of the first embodiment includes the ball returning path 12 configured to return and circulate the balls 3 from an end point to a start point of the ball rolling path 11. In other words, as illustrated in FIG. 1, the ball screw of the first embodiment includes the circulation component 20 including the ball returning path 12. The circulation component 20 is attached to the nut 2, whereby the ball rolling path 11 and the ball returning path 12 are connected to each other to form an endless circulation path.

The balls 3 rolling in the ball rolling path 11 are adapted to circulate through the circulation component 20. Specifically, while moving in the ball rolling path 11, the balls 3 revolve around the screw shaft 1, and reach the end point of the ball rolling path 11, where they are in turn scooped up from the ball rolling path 11 into the circulation component 20, and enter one end portion of the ball returning path 12. The balls 3 having entered the ball returning path 12 pass through an inside of the ball returning path 12 of the circulation component 20, then reach an other end portion of the ball returning path 12, and from which they are returned to the start point of the ball rolling path 11.

Thus, the ball screw of the first embodiment is adapted such that with relative rotation movement of the screw shaft 1 and the nut 2, the screw shaft 1 and the nut 2 move relatively linearly in the axial direction via the balls 3 circulating through the circulation path formed by the ball rolling path 11 and the ball returning path 12 and rolling in the inside of the ball rolling path 11. Then, the balls 3 are adapted to infinitely circulate through an inside of the endless circulation path, so that the screw shaft 1 and the nut 2 can continuously move relatively linearly.

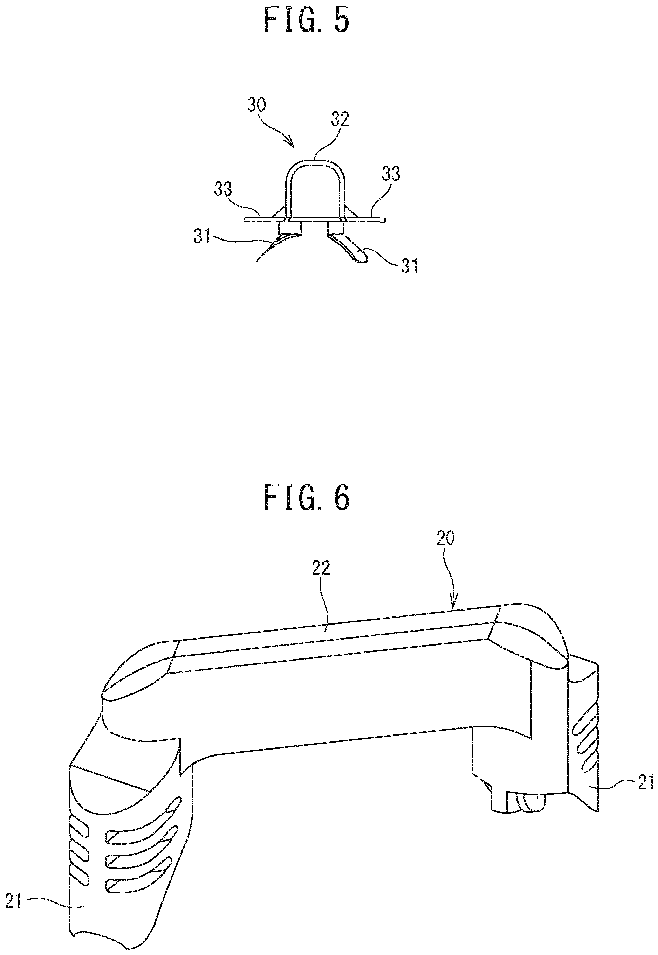

Herein, the circulation component 20 will be described in detail with reference to FIGS. 1, 2, 3, and 6. The circulation component 20 is a resinous tubular member formed into a substantially C-shape, and includes leg portions 21 and 21 at both ends extending in substantially the same direction and an intermediate portion 22 arranged between both the leg portions 21 and 21 and substantially perpendicular to both the leg portions 21 and 21. The circulation component 20 may be an integrated member or a member formed by assembling a plurality of components. For example, as illustrated in FIG. 6, the circulation component 20 may be a member formed by dividing a component into two along a moving direction of the balls 3 moving in the intermediate portion 22 and bonding together the two divided components on divided surfaces thereof.

A part of the outer peripheral surface of the nut 2 is scraped flat and cut out to form a flat surface portion 2b parallel to the axial direction. Additionally, the nut 2 is provided with a pair of through holes 13 and 13 opening to the flat surface portion 2b and communicating with the spiral groove 2a of the nut 2 at the start point and the end point of the ball rolling path 11. Note that a plurality of circulation components 20 may be attached to a single nut 2, and, in that case, two or more pairs of through holes are provided.

The circulation component 20 is attached to the nut 2 such that both the leg portions 21 and 21 are respectively inserted into both the through holes 13 and 13 from the flat surface portion 2b side, and the intermediate portion 22 positioned outside both the through holes 13 and 13 is positioned on the flat surface portion 2b. Then, the circulation component 20 is fixed onto the flat surface portion 2b by being pressed from above by the circulation component retainer 30 made of metal.

In this case, both the through holes 13 and 13 extend not in a direction orthogonal to the flat surface portion 2b (downward in FIG. 1) but in a direction inclined with respect to the flat surface portion 2b and a tangential direction of the outer peripheral surface of the screw shaft 1. Thus, both the leg portions 21 and 21 and the intermediate portion 22 form, not a perfect right angle, but a slightly larger angle than the right angle. Due to that, partial parts of outer surfaces of proximal end portions (portions connected to the intermediate portion 22) of both the leg portions 21 and 21 of the circulation component 20 fixed onto the flat surface portion 2b are exposed from the through holes 13 and 13.

Next, the circulation component retainer 30 will be described in detail with reference to FIGS. 1 to 5. The circulation component retainer 30 includes leg portion pressing portions 31 and 31 configured to press the leg portions 21 of the circulation component 20 in such a manner as to cover, among surfaces of the leg portions 21 of the circulation component 20, all surfaces exposed from the outer surface (the through holes 13 and 13) of the nut 2, an intermediate portion pressing portion 32 configured to press the intermediate portion 22 of the circulation component 20 in such a manner as to cover, among surfaces of the intermediate portion 22 of the circulation component 20, all surfaces exposed from the outer surface (the flat surface portion 2b) of the nut 2, and flange portions 33 and 33 provided to respectively protrude on both widthwise sides of the intermediate portion pressing portion 32.

The leg portion pressing portions 31 can be configured to have, for example, a substantially plate shape formed in such a manner as to protrude on the nut 2 side from the intermediate portion pressing portion 32 (see FIGS. 3, 4, and 5). The intermediate portion pressing portion 32 can be configured to have, for example, a semi-tubular shape with a substantially U-shaped cross-section having an inner diameter whose length is substantially the same as that of an outer diameter of the circulation component 20. The circulation component retainer 30 is arranged on the flat surface portion 2b of the nut 2 such that the intermediate portion 22 of the circulation component 20 fixed onto the flat surface portion 2b is fitted into the intermediate portion pressing portion 32, and the proximal end portions of the leg portions 21 and 21 exposed from the through holes 13 and 13 are pressed by one plate surfaces (plate surfaces thereof facing the nut 2 side) of the leg portion pressing portions 31 and 31. Then, in this state, the flange portions 33 and 33 are, for example, screwed to the flat surface portion 2b of the nut 2.

By doing this, the circulation component retainer 30 can be fixed to the nut 2 in such a manner that the leg portion pressing portions 31 and 31 cover, among the surfaces of the leg portions 21 and 21 of the circulation component 20, all the surfaces exposed from the outer surface (the through holes 13 and 13) of the nut 2, and the intermediate portion pressing portion 32 covers, among the surfaces of the intermediate portion 22 of the circulation component 20, all the surfaces exposed from the outer surface (the flat surface portion 2b) of the nut 2. The circulation component retainer 30 as above can be produced, for example, by performing drawing of a metallic plate material by using a press machine.

In such a ball screw of the first embodiment, the circulation component 20 is pressed by the circulation component retainer 30 such that all the surfaces exposed from the outer surface of the nut 2 among the surfaces of the circulation component 20 are covered. Thus, even when ball clogging occurs and thereby force loaded to the circulation component 20 increases, breakage of the circulation component 20 and jumping out of the balls 3 are suppressed, so that malfunction hardly occurs.

Thus, even when the spiral grooves 1a and 2a are deteriorated by wear and peeling caused in the spiral grooves 1a and 2a due to long-term use, a period from the breakage of the circulation component 20 to the occurrence of malfunction in the ball screw can be extended. Enabling extension of the period from the breakage of the circulation component 20 to the occurrence of malfunction in the ball screw allows a new ball screw to be prepared and replaced within the extended period. This can minimize the time during which an apparatus using the ball screw is stopped.

In addition, when the balls 3 in the circulation component 20 are pushed out to the ball rolling path 11, force in a direction opposite to a direction in which the balls 3 are pushed out is applied to the leg portions 21 and 21, so that the leg portions 21 and 21 tend to be broken. On the other hand, when while the intermediate portion 22 is pressed by the intermediate portion pressing portion 32, the leg portions 21 and 21 are not pressed, shear force occurs at boundary portions between the intermediate portion 22 and the leg portions 21, whereby the leg portions 21 tend to be broken. Pressing both the intermediate portion 22 and the leg portions 21 as in the ball screw of the first embodiment suppresses breakage of the leg portions 21 as described above.

Furthermore, when the circulation component 20 is a member formed by dividing a component into two along the moving direction of the balls 3 moving in the intermediate portion 22 and bonding together the divided components on the divided surfaces thereof, the balls 3 push the circulation component 20 from inside to try to push and widen a joint between the divided surfaces when ball clogging occurs. However, pressing the circulation component 20 by the circulation component retainer 30 suppress opening of the joint between the divided surfaces.

Still furthermore, since substantially all the surfaces of the circulation component 20 are covered by the nut 2 and the circulation component retainer 30, sound emitted from the circulation component 20 is insulated, which can therefore reduce noise of the ball screw. Moreover, scattering of a lubricant or the like to an outside of the ball screw and intrusion of foreign matter into thereinside can also be suppressed by the circulation component retainer 30.

The ball screw of the first embodiment as above can be suitable to use in, for example, machine tools, injection molding machines, and semiconductor manufacturing apparatuses.

### (Example and Comparative Example of Ball Screw of First Embodiment)

To facilitate occurrence of ball clogging, ball screws, which had been deteriorated due to peeling caused in spiral grooves of the screw shafts thereof, were prepared to perform durability tests. In a ball screw of Comparative Example (see FIGS. 11 and 12), a resinous circulation component was fixed by a circulation component retainer including an intermediate portion pressing portion only, but not including leg portion pressing portions. At a point in time when the ball screw was driven up to approximately 80,000 cycles (79162 cycles), the circulation component was broken, and the balls jumped out of proximal end portions of the leg portions.

By contrast, in the ball screw of Example (see FIGS. 1 to 5) in which the resinous circulation component was fixed by the circulation component retainer including the leg portion pressing portions and the intermediate portion pressing portion, breakage of the circulation component and the leg portion pressing portions and jumping out of the balls from the proximal end portions of the leg portions occurred at a point in time when the ball screw was driven up to approximately 590,000 cycles (588479 cycles).

The above results show that fixing the circulation component by the circulation component retainer including the leg portion pressing portions allows the ball screw to run up to the number of cycles of approximately 7.4 times.

### [Second Embodiment]

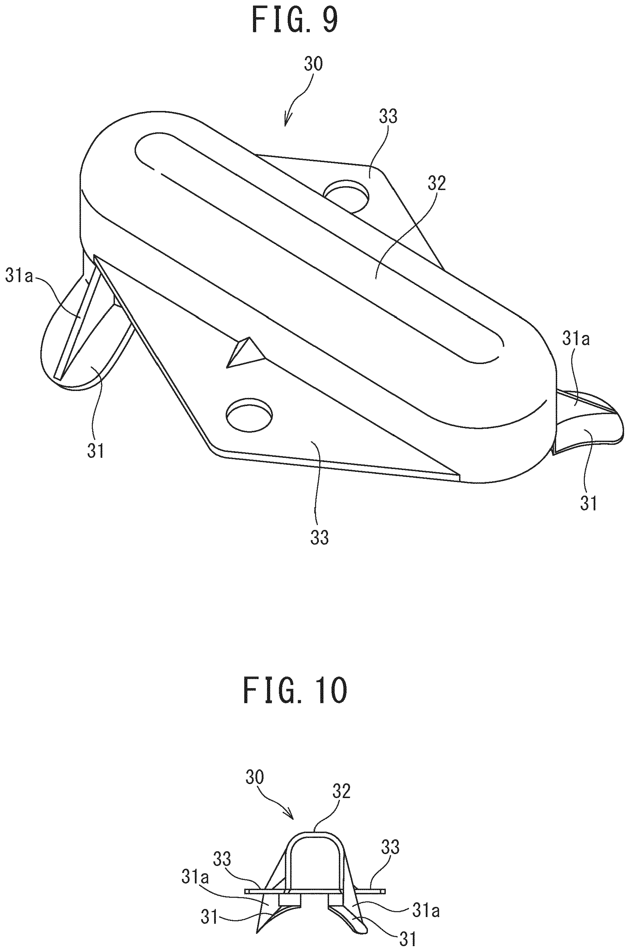

A ball screw of the second embodiment will be described in detail with reference to FIGS. 7 to 10. However, the structure and operational effects of the ball screw of the second embodiment are substantially the same as those of the ball screw of the first embodiment. Thus, different portions only will be described, and a description of the same portions will be omitted. Additionally, in FIGS. 7 to 10, the portions that are the same as or correspond to those of FIGS. 1 to 5 are denoted by the same reference signs as those of FIGS. 1 to 5.

As illustrated in FIGS. 7 to 10, each of the substantially plate-shaped leg portion pressing portions 31 may include a rib 31a configured to reinforce the leg portion pressing portions 31 on surfaces opposite to surfaces pressing, among the surfaces of the leg portions 21 and 21 of the circulation component 20, the surfaces exposed from the outer surface (the through holes 13 and 13) of the nut 2. The ribs 31a are, for example, plate-shaped, and connect the leg portion pressing portions 31 to the intermediate portion pressing portion 32. Reinforcing the leg portion pressing portions 31 by the ribs 31a further suppresses breakage of the leg portions 21 and 21. Thus, breakage of the circulation component 20 and jumping out of the balls 3 are further suppressed, whereby malfunction further hardly occurs in the ball screw. Reference Signs List

- 1:: Screw shaft
- 1a:: Spiral groove
- 2:: Nut
- 2a:: Spiral groove
- 2b:: Flat surface portion
- 3:: Ball
- 11:: Ball rolling path
- 12:: Ball returning path
- 13:: Through hole
- 20:: Circulation component
- 21:: Leg portion
- 22:: Intermediate portion
- 30:: Circulation component retainer
- 31:: Leg portion pressing portion
- 31a:: Rib
- 32:: Intermediate portion pressing portion

## Claims

1. A circulation component retainer configured to be used in a ball screw comprising a screw shaft including a spiral groove on an outer peripheral surface of the screw shaft, a nut including a spiral groove facing the spiral groove of the screw shaft on an inner peripheral surface of the nut, a plurality of balls rollably arranged in a ball rolling path formed by both the spiral grooves, and a circulation component including a ball returning path configured to return the balls from an end point to a start point of the ball rolling path, wherein,
the circulation component is a resinous tubular member formed into a substantially C-shape and including a leg portion at both ends and an intermediate portion arranged between both the leg portions, and is attached to the nut such that both the leg portions are respectively inserted from an outer surface side of the nut into a pair of through holes opening to the outer surface of the nut and communicating with the spiral groove of the nut, and the intermediate portion is positioned on the outer surface of the nut, the circulation component retainer being a circulation component retainer made of metal and configured to fix the circulation component to the nut, and
the circulation component retainer comprises:
an intermediate portion pressing portion configured to press the intermediate portion of the circulation component in such a manner as to cover, among surfaces of the intermediate portion of the circulation component, all surfaces exposed from the outer surface of the nut; and
leg portion pressing portions configured to press the leg portions of the circulation component in such a manner as to cover, among surfaces of the leg portions of the circulation component, all surfaces exposed from the outer surface of the nut.

2. The circulation component retainer according to claim 1, wherein the leg portion pressing portions protrude on the nut side from the intermediate portion pressing portion.

3. The circulation component retainer according to claim 1 or 2, wherein each of the leg portion pressing portions is substantially plate-shaped, and includes a rib configured to reinforce the leg portion pressing portions on surfaces opposite to surfaces pressing the leg portions of the circulation component.

4. A ball screw comprising the circulation component retainer according to any one of claims 1 to 3.
